# EUROPEAN PATENT SPECIFICATION

(11) **EP 2 618 193 B1**
(45) Date of publication and mention of the grant of the patent: **15.05.2019**
(21) Application number: 12183953.4
(22) Date of filing: 11.09.2012
(51) Int. Cl.: G02B 6/44, G02B 6/50

(54) **Telecommunication infrastructure for use in unconventional harsh environments without the aid of additional protection**
Telekommunikationsinfrastruktur für die Verwendung in nicht herkömmilchen rauen Umgebungen ohne die Unterstützung durch Schutzvorrichtungen
Infrastructure de télécommunication destinée à être utlisés dans les environments hostiles non conventionnels sans l'aide de dispositifs de protection

(30) Priority: 17.01.2012 IT MI20120041
(43) Date of publication of application: 24.07.2013
(73) Proprietor: Città Metropolitana di Milano, 20121 Milano (IT); Solifos AG, Fiber Optic Systems, 5210 Windisch (CH)
(72) Inventor: Massari, Cristoforo, 20121 Milano (IT); Andrini, Fabio, 20121 Milano (IT); Fusco, Patrizia, 20121 Milano (IT); Meier, Patrick, 5201 Brugg (CH); Oeschger, Beat, 5201 Brugg (CH)
(74) Representative: Rastelli, Franco

(56) References cited:
- EP-A1- 2 402 806
- WO-A1-2004/027486
- WO-A1-2009/016788
- WO-A2-2008/066782
- US-A- 6 101 304
- SHIGERU TOMITA NTT JAPAN: "Draft additional appendix â Appendix III; Italian experience: Construction of special optical fibre cables for extreme applications in sewer environmentâ to ITU-T Recommendation L.78 (for agreement);332 (PLEN/15)", ITU-T DRAFTS ; STUDY PERIOD 2009-2012, INTERNATIONAL TELECOMMUNICATION UNION, GENEVA ; CH, vol. Study Group 15 ; 5, 16/15, 8 June 2010 (2010-06-08), pages 1-4, XP017467446,

## Description

### BACKGROUND OF THE INVENTION

The present invention relates to a telecommunication infrastructure particularly suitable for use in unconventional harsh environments without an assistance of protective devices.

As it is known, in modern telecommunication networks nearly exclusively optical fiber cables are used.

Since this field is continuously expanding, improved performance optical fibers are continuously required, both with respect to the transportable data volume and a mechanical strength and time duration.

### SUMMARY OF THE INVENTION

Accordingly, the aim of the present invention is to provide a telecommunication infrastructure, particularly suitable for application in unconventional harsh environments, such as a sewer system, without requiring protecting arrangements or devices.

Within the scope of the above mentioned aim, a main object of the invention is to provide such a telecommunication infrastructure which is adapted to house therein optical fiber cables which may also be installed in subsequent times in said unconventional telecommunication infrastructure.

Another object of the present invention is to provide such a telecommunication infrastructure which may be made by novel making method and materials providing a perfectly sealed condition with respect to outer chemical agents and bites of rodents usually present in a large number in a sewer system.

Yet another object of the present invention is to provide such a telecommunication infrastructure adapted to be permanently left installed in a duct, in a sewer sewage fully immersed condition, while protecting the cables against aggressive chemical agent reflux fluids.

Yet another object of the present invention is to provide such a telecommunication infrastructure which, owing to its specifically designed constructional features, is very reliable and safe in operation.

According to one aspect of the present invention, the above mentioned aim and objects, as well as further objects which will become more apparent hereinafter, are achieved by a telecommunication infrastructure for use in unconventional harsh environments without an assistance of protective devices, characterized in that said infrastructure comprises a stranded reinforcement structure encompassed by a protective outer sheath, in said reinforcement structure being arranged a plurality of plastics material empty tubes, embedded in a containing body together with a plurality of radially extending reinforcement elements, and central reinforcement elements substantially arranged along a central axis of said structure, said empty tubes housing therein optical fiber cables or other conductor elements engageable in said empty tubes by a high pressure blowing air.

### BRIEF DESCRIPTION OF THE DRAWING

Further characteristics and advantages of the present invention will become more apparent hereinafter from the following detailed disclosure of a preferred, though not exclusive, embodiment of the invention which is illustrated, by way of an indicative but not limitative example, in the accompanying drawing, where:

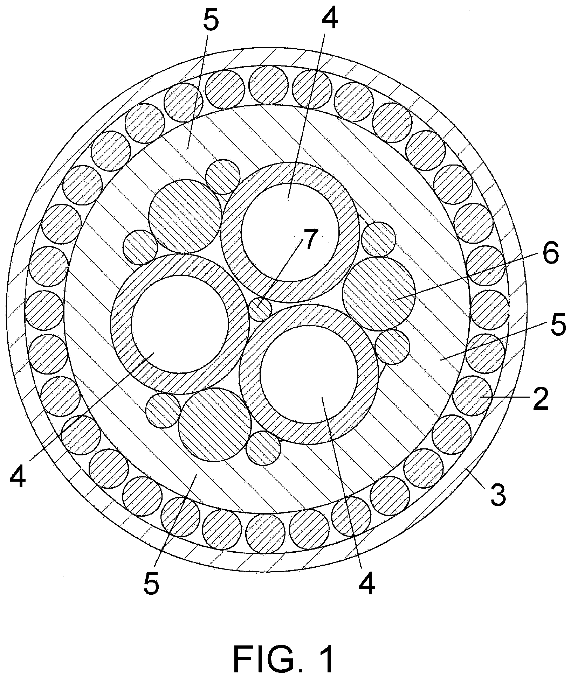

Figure 1 is a cross-sectional view of the telecommunication infrastructure according to the present invention.

### DESCRIPTION OF THE PREFERRED EMBODIMENTS

With reference to the number references of the above mentioned figure, the telecommunication infrastructure according to the present invention, which is generally indicated by the reference number 1, comprises a stranded reinforcement structure comprising a plurality of solid circular cross-section adjacent or adjoining strands 2 encompassed by a protective outer sheath 3.

Within said reinforcement structure are provided three empty tubes 4, made of a plastics material, and embedded in an empty tube containing solid body 5 together with a plurality of radially extending reinforcement elements 6 and a further central reinforcement solid circular cross-section element 7 substantially extending along the middle or central axis of the structure and having an outer surface contacted by a portion of the outer surface of all said empty tubes 4.

Said tubes 4 should not be considered as filling-in or other elements designed for integrating a mechanical protection of a cable, even of an optical fiber type, as in conventional structures, but as specifically provided for housing therein optical fiber cables to be engaged therein in any desired subsequent type by a high pressure blowing air.

Thus, this allows to engage in the tubes 4 further cables, even at any desired subsequent point of time.

The infrastructure elements encompassing the empty tubes, that is the containing body 5, reinforcement elements 6 and reinforcement structure 2 with its protective outer sheath 3, are made by novel method and materials, adapted to provide the infrastructure with a perfect sealing against outer chemical agents and bites of rodents, which, as it is known, are present in a great number in a sewer.

This renders the subject infrastructure fully different from a conventional one, both from a use and constructional characteristic standpoint.

More specifically, the inventive infrastructure is particularly suitable to be used in harsh environments, in particular sewer systems, where it will be held on the duct bottom, fully immersed in the sewer sewage or other liquids.

The elements providing the composite cables with the required protection, in particular in a sewer system, in which very aggressive chemical agents are present, comprise an assembly of materials having a thermal expanding coefficient suitable for the intended application.

More specifically, the protective outer sheath 2, differently from any other polymeric materials, consists of a combination of raw materials designed for providing the protective sheath with slippery properties in the presence of any liquid substances.

This feature allows the reflux liquids from sliding along the composite cable without waste material deposit problems.

It has been found that the invention fully achieves the intended aim and objects.

In this connection, the Applicant wishes to further draw the attention on the fact that the inventive infrastructure should not be considered as a conventional type of optical fiber cable, but as a true infrastructure designed for receiving and protecting optical fiber cables.

The main feature of the present invention is the provision of the above disclosed empty tubes for housing optical fiber cables, to be engaged therein by a high pressure blowing air.

In practicing the invention, the used materials, as well as the contingent size and shapes, can be any, depending on requirements.

## Claims

1. An infrastructure suitable to be used in harsh environments, in particular sewer systems and to be installed in a duct completely immersed in sewer sewage or other liquids for holding telecommunication optical fiber cables, without using further auxiliary protecting devices, said infrastructure comprising:
a central reinforcement element (7) extending substantially along the middle axis of the structure;
a plurality of plastics empty tubes (4) arranged around the central reinforcement rod, said empty tubes (4) being suitable for subsequent insertion therein of optical fiber cables and other conductor elements by high pressure blowing air;
a plurality of radially extending reinforcement elements (6) arranged around said empty tubes (4); wherein
said empty tubes (4) and radially extending reinforcement elements (6) are embedded inside a containing body (5);
and wherein said infrastructure further includes;
a stranded reinforcement structure (2) arranged around the containing body (5);
and a protective outer sheath (3) encompassing the stranded reinforcement structure (2).

2. A telecommunication infrastructure according to claim 1, **characterized in that** said empty tubes (4) are designed for receiving therein further cables at any subsequent time instants.

3. An infrastructure according to claim 1, **characterized in that** said empty tubes (4) comprise three empty tubes (4).

4. An infrastructure according to claim 1, **characterized in that** the infrastructure elements comprising the empty tubes (4), the containing body, reinforcement elements (6), reinforcement structure (2) and outer protective sheath (3) provide a tight sealing against chemical agents and rodents attacks.

5. An infrastructure according to claim 1, **characterized in that** said protective outer sheath (3) comprises a combination of materials adapted to make said sheath (3) slipping in a presence of a liquid substance.

## Patentansprüche

1. Infrastruktur, die zur Verwendung in rauen Umgebungen und insbesondere Kanalisationssystemen geeignet ist und vollständig eingetaucht in einem Kanal in Abwasserkanalabwasser oder andere Flüssigkeiten zum Aufnehmen von Telekommunikationslichtwellenleiterkabeln zu installieren ist, ohne weitere Hilfsschutzeinrichtungen zu verwenden, wobei die Infrastruktur umfasst:
ein zentrales Verstärkungselement (7), das sich im Wesentlichen entlang der mittleren Achse der Struktur erstreckt;
mehrere leere Kunststoffrohre (4), die um die zentrale Verstärkungsstange herum angeordnet sind, wobei die leeren Rohre (4) für das anschließende Einsetzen von Lichtwellenleiterkabeln und anderen Leiterelementen darin durch Hochdruckblasluft geeignet sind;
mehrere sich radial erstreckende Verstärkungselemente (6), die um die leeren Rohre (4) herum angeordnet sind; wobei
die leeren Rohre (4) und die sich radial erstreckenden Verstärkungselemente (6) innerhalb eines enthaltenden Körpers (5) eingebettet sind;
und wobei die Infrastruktur ferner umfasst;
eine verseilte Verstärkungsstruktur (2), die um den enthaltenden Körper (5) angeordnet ist;
und einen Schutzaußenmantel (3), der die verseilte Verstärkungsstruktur (2) umschließt.

2. Telekommunikationsinfrastruktur nach Anspruch 1, **dadurch gekennzeichnet, dass** die leeren Rohre (4) zum Aufnehmen von weiteren Kabeln darin zu irgendwelchen nachfolgenden Zeitpunkten konzipiert sind.

3. Infrastruktur nach Anspruch 1, **dadurch gekennzeichnet, dass** die leeren Rohre (4) drei leere Rohre (4) umfassen.

4. Infrastruktur nach Anspruch 1, **dadurch gekennzeichnet, dass** die Infrastrukturelemente, welche die leeren Rohre (4), den enthaltenden Körper, die Verstärkungselemente (6), die Verstärkungsstruktur (2) und eine äußere Schutzhülle (3) umfassen, eine sichere Abdichtung gegen chemische Stoffe und Nagetierangriffe bereitstellen.

5. Infrastruktur nach Anspruch 1, **dadurch gekennzeichnet, dass** der Schutzaußenmantel (3) eine Kombination aus Materialien umfasst, die derart angepasst sind, dass sie den Mantel (3) in eine vorhandene flüssige Substanz hineingleiten lassen.

## Revendications

1. Infrastructure destinée à être utilisée dans des environnements hostiles, en particulier des systèmes d'égouts et à être installée dans un conduit complètement immergé par des eaux usées d'égout ou par d'autres liquides destinée au maintien des câbles de télécommunications à fibre optique sans utiliser d'autres dispositifs de protection auxiliaires, ladite infrastructure comprenant :
un élément de renfort central (7) s'étendant essentiellement le long de l'axe central de la structure ;
une pluralité de tubes vides en plastique (4) agencés autour de la tige de renfort central, lesdits tubes vides (4) étant adaptés pour une insertion ultérieure dans ceux-ci de câbles à fibre optique et d'autres éléments conducteurs par de l'air de soufflage à haute pression ;
une pluralité d'éléments de renfort s'étendant de manière radiale (6) agencés autour desdits tubes vides (4) ; dans laquelle
lesdits tubes vides (4) et lesdits éléments de renfort s'étendant de manière radiale (6) sont incorporés à l'intérieur d'un corps de confinement (5) ;
et dans laquelle ladite infrastructure comprend en outre ;
une structure de renfort toronnée (2) agencée autour du corps de confinement (5) ;
et une gaine extérieure de protection (3) englobant la structure de renfort toronnée (2).

2. Infrastructure de télécommunication selon la revendication 1, **caractérisée en ce que** lesdits tubes vides (4) sont conçus pour la réception dans ceux-ci de câbles supplémentaires à n'importe quel instant de temps ultérieur.

3. Infrastructure selon la revendication 1, **caractérisée en ce que** lesdits tubes vides (4) comprennent trois tubes vides (4).

4. Infrastructure selon la revendication 1, **caractérisée en ce que** les éléments d'infrastructure comprennent les tubes vides (4), le corps de confinement, les éléments de renfort (6), la structure de renfort (2) et la gaine de protection extérieure (3) fournissent un scellement étanche contre des agents chimiques et des attaques de rongeurs.

5. Infrastructure selon la revendication 1, **caractérisée en ce que** ladite gaine extérieure de protection (3) comprend une combinaison de matériaux conçus pour rendre ladite gaine (3) glissante en présence d'une substance liquide.
